**Europäisches Patentamt**

**European Patent Office**

**Office européen des brevets**

(19)

(11) Veröffentlichungsnummer: **0 202 548**
**B1**

(12) # EUROPÄISCHE PATENTSCHRIFT

(45) Veröffentlichungstag der Patentschrift:
**14.09.88**

(51) Int. Cl.⁴: **C 03 B 37/012,** C 03 B 19/06,
C 03 B 19/09

(21) Anmeldenummer: **86106285.9**

(22) Anmeldetag: **07.05.86**

(54) Verfahren zur Herstellung eines länglichen Glaskörpers, insbesondere einer Vorform für Lichtwellenleiter.

(30) Priorität: **21.05.85 DE 3518142**

(43) Veröffentlichungstag der Anmeldung:
**26.11.86 Patentblatt 86/48**

(45) Bekanntmachung des Hinweises auf die Patenterteilung:
**14.09.88 Patentblatt 88/37**

(84) Benannte Vertragsstaaten:
**AT BE CH DE FR GB IT LI LU NL SE**

(56) Entgegenhaltungen:
**EP - A - 0 127 956**
**EP - A - 0 153 619**
**DE - A - 3 217 965**
**US - A - 2 960 723**

(73) Patentinhaber: **Standard Elektrik Lorenz Aktiengesellschaft, Lorenzstrasse 10, D-7000 Stuttgart 40 (DE)**

(84) Benannte Vertragsstaaten: **BE CH DE IT LI LU NL SE AT**

(73) Patentinhaber: **ALCATEL N.V., Strawinskylaan 537 (World Trade Center), NL-1077 XX Amsterdam (NL)**

(84) Benannte Vertragsstaaten: **FR GB**

(72) Erfinder: **Dorn, Reimund, Dr., Peter-von-Koblenz-Strasse 31, D-7141 Schwieberdingen (DE)**

(74) Vertreter: **Kugler, Hermann, Dipl.-Phys. et al, Standard Elektrik Lorenz AG Patent- und Lizenzwesen Postfach 30 09 29, D-7000 Stuttgart 30 (DE)**

## Beschreibung

Die Erfindung betrifft ein Verfahren zur Herstellung eines länglichen Glaskörpers.

Aus EP-A-0 127 956 ist ein Verfahren zur Herstellung eines länglichen Glaskörpers bekannt, bei dem man pulverförmiges Glasausgangsmaterial lose in eine Pressform einfüllt, danach das lose eingefüllte Material in einem separaten Pressvorgang verdichtet, die mit dem verdichteten pulverförmigen Glasausgangsmaterial gefüllte Pressform einer das Pulvermaterial verfestigenden Wärmebehandlung unterzieht und anschliessend den durch die Wärmebehandlung erhaltenen porösen Körper zu einem Glaskörper sintert.

Das Pressen von lose in eine Pressform eingefülltem Material birgt folgende Nachteile in sich:

1. Es ist schwierig, innerhalb der Pressform eine räumlich gleichmässige Dichte zu erreichen, da in dem lose eingefüllten Pulver durch Brückenbildungen unregelmässige Hohlräume vorhanden sind. Infolgedessen wird der beim Sintervorgang aus derart behandeltem Material entstehende Glaskörper starke Abweichungen von der gewünschten Geometrie haben.

2. Der Pressvorgang kann Spannungen innerhalb des gepressten Materials verursachen, so dass der poröse Körper leicht brechen kann.

3. Der Pressvorgang ergibt einen porösen Körper mit bereits relativ hoher Dichte, d.h. relativ geringer Porösität, wodurch die Trocknung/Reinigung erschwert ist.

Eine europäische Patentanmeldung EP-A2-0 153 619, die unter Artikel 54 (3) EPÜ fällt, hat ein Verfahren zur Herstellung eines länglichen Glaskörpers zum Gegenstand, bei dem pulverförmiges Glasausgangsmaterial derart in eine Pressluft eingefüllt wird, dass es beim Einfüllen vorverdichtet wird, nach dem Einfüllen das vorverdichtete Material durch Pressen zu dem porösen Körper geformt und anschliessend der poröse Körper zum Glaskörper gesintert wird. Die zum Einfüllen dienende Vorrichtung enthält dabei als Form, in die eingefüllt wird, eine Pressform, z.B. einen flexiblen Schlauch.

Es ist die Aufgabe der Erfindung, ein Verfahren der genannten Art anzugeben, das die oben aufgezeigten Nachteile des aus EP-A 0 127 956 bekannten Verfahrens vermeidet und sich von dem in EP-A2-0 153 619 vorgeschlagenen Verfahren unterscheidet.

Die Aufgabe wird wie im Patentanspruch 1 angegeben gelöst. Vorteilhafte Ausgestaltungen und Weiterbildungen des Verfahrens sind den Unteransprüchen zu entnehmen, insbesondere betrifft der Anspruch 14 eine Vorrichtung zur Durchführung des zu dem erfindungsgemässen Verfahren gehörenden Verfahrensschritts des Einfüllens des pulverförmigen Glasausgangsmaterials in eine Form.

Die Erfindung wird nun anhand der Zeichnungen beispielsweise näher erläutert.

Es zeigen:

Fig. 1 eine Vorrichtung zum Einfüllen des pulverförmigen Glasausgangsmaterials in eine Form gemäss dem erfindungsgemässen Verfahren,

Fig. 2 eine Andordnung zur Regelung des Einfülldrucks für eine Vorrichtung nach der in Fig. 1 gezeigten Art, und

Fig. 3 einen Teil einer Fördervorrichtung zum Formen eines rohrförmigen porösen Körpers.

Die Erfindung wird nachstehend im Hinblick auf den Anwendungsfall der Herstellung einer Vorform für Lichtwellenleiter beschrieben, wobei das Ausgangsmaterial $SiO_2$ als Basismaterial hat, das zur Veränderung des Berechnungsindex im allgemeinen eines oder mehrere Dotierungsmittel wie beispielsweise $GeO_2$, $P_2O_5$, F, $B_2O_3$ enthält. Es ist darauf hinzuweisen, dass sich das erfindungsgemässe Verfahren auch zur Herstellung von anderen Gegenständen als Lichtwellenleitern verwenden lässt, sofern nur das dafür in Frage kommende Ausgangsmaterial in Pulverform hergestellt, zu einem porösen Körper geformt und dieser zum Glaskörper gesintert werden kann.

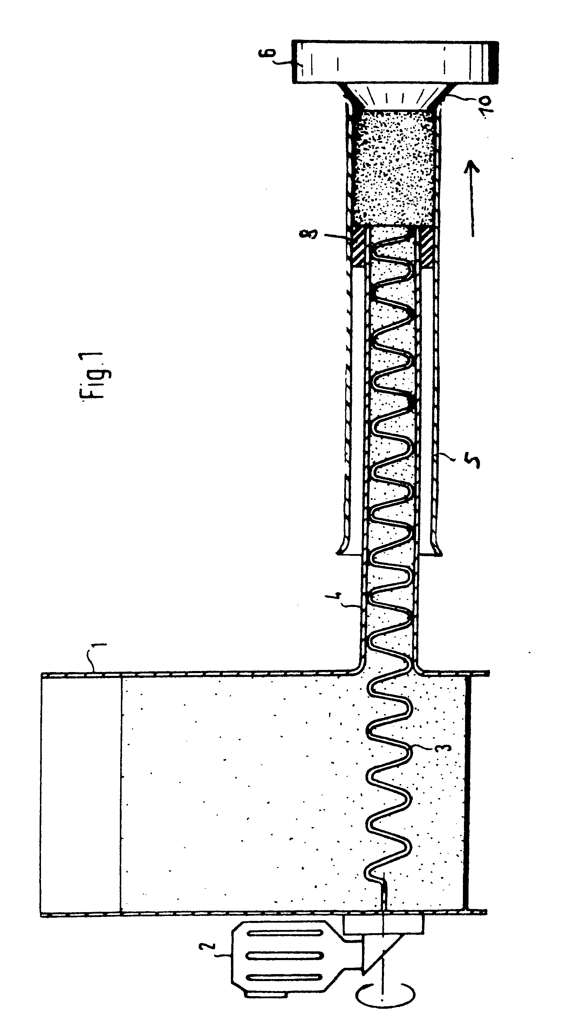

Die in Fig. 1 gezeigte Vorrichtung hat einen Vorratsbehälter 1, in dem sich das pulverförmige Glasausgangsmaterial, im folgenden vereinfacht auch Pulvermaterial genannt, befindet und der gegen die äussere Atmosphäre abgedichtet ist. Für den genannten Anwendungsfall handelt es sich um synthetisch hergestelltes pulverförmiges Glasausgangsmaterial auf der Basis von $SiO_2$, eventuell mit Dotierungszusätzen. Zur Herstellung des Pulvermaterials sind nicht nur die aus der eingangs genannten Druckschrift bekannten Verfahren der chemischen Dampfphasenreaktion und der Flammhydrolyse (auch pyrogenes Verfahren genannt) geeignet, sondern auch sogenannte «nasschemische» Verfahren, bei denen das Pulvermaterial durch Ausfällen aus einer chemischen Flüssigphasenreaktion und anschliessendes Trocknen des ausgefällten Materials gewonnen wird.

Abhängig vom Feuchtigkeitszustand und vom Reinheitszustand des synthetisch hergestellten Pulvermaterials, kann es notwendig oder günstig sein, vor dem Einfüllen in den Vorratsbehälter eine Trocknung durch Tempern in einem Vakuum und/oder eine Reinigung durch eine Wärmebehandlung in chlorhaltiger Atmosphäre durchzuführen. Die Trocknungs- und Reinigungswirkung ist infolge der grossen Oberfläche des Pulvermaterials intensiver als die entsprechende Behandlung nach dem Formen der porösen Körper. Diese Vorbehandlung erlaubt also die Verwendung von weniger reinen und weniger trockenen Materialien, die sich kostengünstiger herstellen lassen.

Um die Schüttdichte des Pulvermaterials zu erhöhen und damit ein formtreues Verdichten zu erleichtern, kann es notwendig oder günstig sein, das Pulvermaterial zu agglomerieren, wofür thermische oder mechanische oder Flüssigkeitsverfahren zur Verfügung stehen.

Im Vorratsbehälter 1 befindet sich in Bodennähe eine von einem aussenliegenden Motor 2 angetriebene Förderschnecke 3, mit der sich das im Vorratsbehälter befindliche Pulvermaterial durch ein langgestrecktes Förderrohr 4 hindurch aus dem Vorratsbehälter 1 hinausfördern lässt. Das Förderrohr 4 ragt in eine Form 5 hinein, die mit dem Pulvermaterial gefüllt werden soll. Die Form ist im gezeigten Beispiel ein Kieselglasrohr, das an dem in Förderrichtung gelegenen Ende durch einen Deckel 6 verschlossen ist. Der Einfülldruck wird dadurch erzeugt, dass die Förderschnecke das Material mit der durch ihren Motor vorgegebenen Förderkraft in Richtung zum Deckel 6 drückt und dass auf den Deckel 6 eine Gegenkraft gegen die Förderrichtung wirkt.

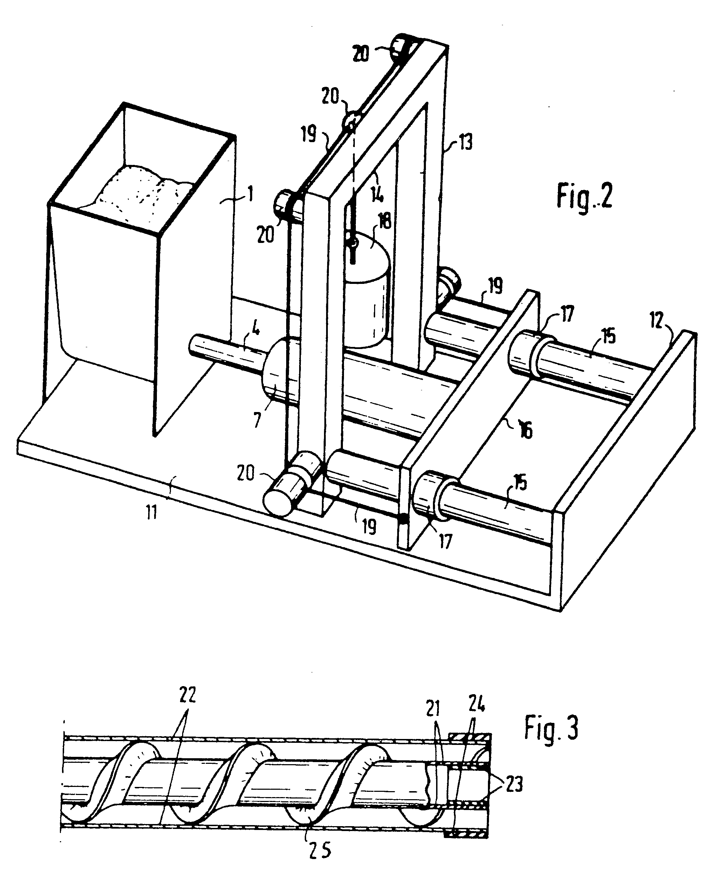

Zur Begrenzung des Einfülldrucks ist eine Vorrichtung vorgesehen, die anhand von Fig. 2 erläutert wird und die für eine einstellbare Gegenkraft sorgt.

Zum Abdichten des zwischen dem Förderrohr 4 und der Form 5 bestehenden Zwischenraums ist das Auslassende des Förderrohrs 4 von einem Dichtring 8 umgeben, der am Förderrohr befestigt ist und für eine konstante Reibungskraft zwischen dem Förderrohr 4 und der Form 5 sorgt, die nicht davon abhängt, wie weit das Förderrohr 4 gerade in die Form hineinragt.

Das in Förderrichtung gelegene Ende der Form wird dadurch den bereits erwähnten Deckel 6 abgedichtet, der an seiner der Form zugewandten Seite einen kegelstumpfförmigen Ansatz 10 aufweist, der in das Ende der Form 5 hineingedrückt wird, derart, dass seine Mantelfläche am Formende fest anliegt und dieses abdichtet. Befestigt ist der Deckel durch nicht gezeigte Haltemittel, beispielsweise durch einen Spannbügel, der an die Aussenseite der Form 5 montierbar ist oder durch eine den Deckel umgebende auf die Aussenseite der Form aufschraubbare Kappe.

Beim Einfüllen in die Form wird das Pulvermaterial unter der Wirkung des Einfülldrucks verdichtet. Dabei schiebt die Förderkraft der Förderschnecke die gesamte Form gegen die auf den Deckel wirkende Gegenkraft in Förderrichtung vom Förderrohr weg, bis auf diese Weise fast der gesamte Innenraum der Form mit verdichtetem Pulvermaterial ausgefüllt ist. Die Bewegung der Form relativ zum Förderrohr beim Einfüllen ist durch einen in Förderrichtung weisenden Pfeil unterhalb der Form angedeutet.

Nach dem Einfüllen wird die Form aus der Einfüllvorrichtung, die als Ganzes in Fig. 2 gezeigt ist und noch erläutert wird, entnommen und ohne den Deckel 6 in einen Ofen gebracht. Im Ofen wird die mit dem verdichteten Material gefüllte Form einer Wärmebehandlung bei nahezu 1200°C unterzogen, wobei der Ofen von einem Gasgemisch durchströmt wird.

Dabei wird das in der Form befindliche, verdichtete Pulvermaterial infolge der Wärme getrocknet und verfestigt, und das Gasgemisch sorgt für die notwendige Reinigung. Beispielsweise besteht das Gasgemisch aus Helium, Chlor und Sauerstoff. Dabei treibt das chemisch inaktive Helium, das eine hohe Diffusionsgeschwindigkeit hat, Restgase aus, das Chlor bildet leicht flüchtige chemische Verbindungen mit den in Form von Hydroxylgruppen und Übergangsmetallen vorliegenden Verunreinigungen des Pulvermaterials, und der Sauerstoff oxidiert Kohlenstoffreste und verhindert das Abdampfen von flüchtigen Dotiermitteln. Es sind auch Verbindungsgase als Bestandteile des Gasgemischs möglich, die Chlor oder Sauerstoff abspalten können. Die unmittelbar vor dem Sintern noch im porösen Körper befindlichen Restgase werden ebenfalls durch Helium ausgetrieben. Am Ende der Wärmebehandlung liegt ein hochporöser, aber fester Körper vor. Da während der Wärmebehandlung das Volumen des porösen Körpers etwas schrumpft, kann dieser leicht aus dem als Form verwendeten Kieselglasrohr entnommen werden.

Die Entfernung der Verunreinigungen aus dem porösen Körper durch das ihn durchströmende Gas ist besonders effektiv, wenn das obige Gasgemisch mit apparativen Massnahmen gezwungen wird, den porösen Körper zu durchströmen. Hierzu ist z.B. ein solcher Ofen geeignet, in dem das als Form verwendete Kieselglasrohr derart befestigt werden kann, dass es einen Teil des Reaktor-Rohres des Ofens bildet.

Der poröse Körper, der aufgrund des beschriebenen Verfahrens eine homogene Materialzusammensetzung hat, lässt sich nun zu einem Lichtwellenleiter weiterverarbeiten, beispielsweise indem er durch Sintern in einen Glaskörper überführt und dieser dann zu einer Glasfaser ausgezogen wird.

Im einfachsten Falle kann diese Faser beim Ziehvorgang mit einem durchsichtigen Kunststoffmantel überzogen werden, dessen Brechungsindex geringer als der des Glasmaterials ist, so dass ein Lichtwellenleiter in Form einer kunststoffummantelten Faser, einer sogenannten PCS-Faser (Plastics Clad Silica), entsteht. Der poröse Körper kann aber auch auf andere, an späterer Stelle erläuterte Weise zu einem anderen Lichtwellenleiter-Typ weiterverarbeitet werden.

Anhand von Fig. 2 wird nun der Gesamtaufbau einer Einfüllvorrichtung, deren für das erfindungsgemässe Verfahren wesentliche Einzelheiten bereits in Fig. 1 dargestellt sind, erläutert, insbesondere die Vorrichtung, die beim Einfüllen die Gegenkraft gegen die Förderkraft der Förderschnecke ausübt. Auf einer Grundplatte 11 sind folgende Teile fest montiert: der Pulver-Vorratsbehälter 1 mit dem aus ihm herausragenden Förderrohr 4, eine auf der Grundplatte senkrecht aufgesetzte Befestigungsplatte 12, wobei diese und der Pulverbehälter sich an gegenüberliegenden Enden der Grundplatte 11 befinden, ein Tragarm 13, der brückenartig auf der Grundplatte befestigt ist, derart, dass sein Querbalken 14 rechtwinklig zur Längsachse der Grundplatte und parallel zur Richtung der Befestigungsplatte verläuft. Zwischen den senkrechten Balken des Tragrahmens und der Befestigungsplatte 12 erstrecken sich zwei parallele Führungselemente, beispielsweise Führungsrohre 15, auf denen eine Gegendruck-Platte 16, die mit Führungshülsen 17 versehen ist, in Längsrichtung der Grundplatte zwischen dem Tragrahmen und der Befestigungsplatte verschiebbar angeordnet ist.

Das Rohr 7, das die Form enthält und in welches das Förderrohr 4 hineinragt, ist ebenso wie die Gegendruck-Platte 16 in Längsrichtung verschiebbar angeordnet, entweder dadurch, dass es starr, aber lösbar mit der Gegendruck-Platte 16 verbunden ist, oder dass es in einer Führungsrille verschiebbar gelagert ist und sein durch einen Deckel verschlossenes Ende an der Gegendruck-Platte, ohne mit dieser verbunden zu sein, anliegt. Die Gegendruck-Platte wird durch ein einstellbares Gewicht 18, das über Zugseile 19 und Umlenkrollen 20 am Tragrahmen 13 aufgehängt ist, gegen das Ende des Rohres 7 von aussen angedrückt, gegen das von innen das Pulvermaterial durch die Wirkung der Förderschnecke gedrückt wird. Die Zugseile 19 sind an beiden Seiten der Gegendruck-Platte 16 befestigt.

Auf diese Weise wird beim Einfüllen unter der Wirkung der Förderschnecke die Form in Förderrichtung vom Förderrohr weggeschoben und dabei das eingefüllte Pulvermaterial verdichtet, wobei der Druck, unter dem die Verdichtung stattfindet, von dem Gewicht 18 bestimmt wird, das die Gegendruck-Platte und damit das Ende des Förderrohres gegen die Kraft der Förderschnecke andrückt. Die Fördergeschwindigkeit, mit der das Pulvermaterial in die Form eingefüllt wird, wird durch die Konstruktion der Förderschnecke und deren Drehzahl bestimmt, und der Einfülldruck ist durch das Gewicht 18 einstellbar.

Es ist selbstverständlich, dass eine Vielzahl anderer Vorrichtungen dazu geeignet sind, das Einfüllen des Pulvers in die Form bei einem einstellbaren Einfülldruck zu ermöglichen. Beispielsweise ist auch eine kinematisch umgekehrt arbeitende Vorrichtung geeignet, bei der das Rohr 7 fest montiert und der Pulver-Vorratsbehälter mit dem Förderrohr 4 gegen ein einstellbares Gewicht, das der Förderkraft entgegenwirkt, entgegen der Förderrichtung, verschiebbar angeordnet ist.

Der anhand von Fig. 1 beschriebene Einfüllvorgang lässt sich im Prinzip auch auf solche Fälle anwenden, bei denen der zu formende poröse Körper keine homogene Zusammensetzung, sondern eine sich in radialer Richtung verändernde Zusammensetzung hat. Dies ist dadurch möglich, dass zusätzlich zu der gezeigten Förderschnecke 3, die pulverförmiges Material im Bereich der Längsachse der Pressform in diese hineinfördert, eine oder mehrere weitere Förderschnecken vorhanden sind, die koaxial zu der zentralen Förderschnecke 3 angeordnet sind, um die Material mit anderen Zusammensetzungen in koaxiale Bereiche, die sich an den Mittelbereich anschliessen, einfüllen. Diese Förderschnecken befinden sich dann in Zwischenräumen zwischen mehreren koaxial angeordneten Förderrohren. Die Fördergeschwindigkeit und der Einfülldruck kann dabei für jede der Förderschnecken einzeln eingestellt werden, und der maximale im jeweiligen Bereich bewirkte Einfülldruck ist wie bereits beschrieben durch die auf das geschlossene Rohrende wirkende Gegenkraft bestimmt. Durch die unabhängige Steuerung des durch die verschiedenen Förderschnecken jeweils bewirkten Einfülldrucks können gezielte axiale Veränderungen der Durchmesserverhältnisse der einzelnen aneinandergrenzenden Bereiche eingestellt werden. Unter Verwendung einer solchen Anordnung von koaxialen Förderschnecken erlaubt das erfindungsgemässe Verfahren im Hinblick auf die Herstellung von verschiedenen Lichtwellenleiter-Typen die Formung von porösen Körpern, die aus Kernglasmaterial gegebenenfalls mit radial variierender Zusammensetzung und daran anschliessendem Mantelglasmaterial in irgend einer gewünschten Abstufung bestehen sollen.

Es können auch andere poröse Körper mit nicht ausschliesslich rotationssymmetrischer Struktur wie die bisher beschriebenen hergestellt werden, wenn man nebeneinander liegende, beispielsweise in einem Dreieck oder einem Quadrat angeordnete, Förderschnecken mit jeweils diese umgebenden Förderrohren verwendet. Damit ist es möglich, Lichtwellenleiter mit Mehrfachkernen herzustellen, in denen unabhängige Lichtsignale parallel nebeneinander ausbreitungsfähig sind, oder die polarisationserhaltende Eigenschaften haben. Wenn eine solche Anordnung von Kernen auch noch von einem oder mehreren Mänteln umgeben sein soll, so lässt sich dieses durch eine oder mehrere weitere Förderschnecken erreichen, die um diese Anordnung von Kernen herum verlaufen und ein Material oder mehrere Materialien in Bereiche einfüllen, die koaxial zur Längsachse der Anordnung der mehreren Kerne liegen. Wiederum kann für jede Förderschnecke der Einfülldruck und die Fördergeschwindigkeit individuell gesteuert werden.

Im bisherigen Beschreibungsteil hatte die Form unabhängig von der Anordnung der Förderschnecken immer die Form eines Hohlzylinders, so dass die anschliessende Wärmebehandlung in jedem Falle einen stabförmigen porösen Körper ergibt. Die Form kann aber auch derart ausgebildet sein, dass der geformte poröse Körper ein rohrförmiger Körper ist. Hierzu wird eine Förderschnecke verwendet, die nicht wie die in Fig. 1 gezeigte Förderschnecke das Material im Bereich ihrer Achse fördert, sondern in einem Bereich mit kreisringförmigem Querschnitt, der koaxial zu ihrer Drehachse angeordnet ist. Eine solche Förderschnecke ist in Fig. 3 gezeigt.

Diese Förderschnecke 25 dreht sich im Zwischenraum zwischen einem inneren Rohr 21 und einem dazu koaxial angeordneten äusseren Rohr 22 um das innere Rohr herum, so dass sie das pulverförmige Glasausgangsmaterial durch diesen Zwischenraum hindurch in die Form in einen von der Achse entfernten koaxialen Bereich hineinfördert.

Als Form zur Formung eines rohrförmigen Körpers kann die in Fig. 1 gezeigte Form mit einer geringfügigen Abwandlung verwendet werden. Die Abwandlung der Form nach Fig. 1 besteht darin, dass entlang ihrer Längsachse vom einen zum anderen Ende ein Stab oder ein Rohr beispielsweise aus Kieselglas angeordnet ist, der z.B. am Deckel 6 in einer zentralen Vertiefung befestigbar ist. Die Förderschnecke der in Fig. 3 gezeigten Art fördert nun in entsprechender Weise wie anhand von Fig. 1 beschrieben das Pulvermaterial in den Zwischenraum zwischen diesem Stab oder Rohr und der Innenwand der Form. Nach der Wärmebehandlung lässt sich der stab- oder rohrförmige Grundkörper mühelos aus der Mitte des porösen Körpers entfernen.

Am vorderen Ende weist die Anordnung nach Fig. 3 zwei Dichtringe 23 und 24 auf, die den Bereich, in dem das Pulvermaterial in die Form hineingefördert wird, gegen die jeweils anliegenden Teile der Form abdichten und ebenso wie der Dichtring 8 bei der Anordnung nach Fig. 1 für eine konstante positionsunabhängige Reibungskraft sorgen. Der innere Dichtring 23 ist auf der Innenseite des inneren Rohres 21 befestigt und liegt an der Aussenseite des stab- oder rohrförmigen Grundkörpers an, wogegen der äussere Dichtring 24 an der Aussenseite des äusseren Rohres 22 befestigt ist und an der Innenseite der Form 1 (Fig. 1) anliegt.

Es gibt nun mehrere Möglichkeiten, aus dem rohrförmigen porösen Körper einen stabförmigen länglichen Glaskörper zu machen, der als Vorform für einen Lichtwellenleiter geeignet ist.

Man kann den rohrförmigen porösen Körper derart sintern, dass er beim Sintern zu einem stabförmigen Glaskörper kollabiert. Eine zweite Möglichkeit besteht darin, dass man in den rohrförmigen porösen Körper einen in der beschriebenen Art hergestellten stabförmigen porösen Körper steckt und dieses poröse Stab-Rohr-Gebilde zu dem stabförmigen Glaskörper sintert. Falls der rohrförmige Körper aus dem Mantelmaterial eines Lichtwellenleiters und der stabförmige Körper aus dessen Kernmaterial besteht, lässt sich aus der so hergestellten glasigen Vorform ein Lichtwellenleiter mit einer Kern-Mantel-Struktur herstellen.

Eine weitere Möglichkeit, aus einem stabförmigen porösen Körper einen länglichen Glaskörper zu bilden, besteht darin, dass man den rohrförmigen porösen Körper zu einem Glasrohr und den stabförmigen porösen Körper zu einem Glasstab sintert, den Glasstab in das Glasrohr steckt und dieses Gebilde zu einem länglichen Glaskörper verschmilzt.

Nachstehend werden einige Abwandlungen des vorstehend beschriebenen Verfahrens angegeben:

Beim bisher beschriebenen Verfahren wird die Materialzusammensetzung der geformten rohrförmigen und/oder stabförmigen Körper bereits durch die Zusammensetzung des pulverförmigen Glasausgangsmaterials bestimmt, d.h. durch die im $SiO_2$-Basismaterial enthaltenen Dotiermittel wie beispielsweise $GeO_2$, $P_2O_5$, F, $B_2O_3$.

Stattdessen kann man den porösen Körper auch aus reinem $SiO_2$-Basismaterial herstellen und die Dotiermittel durch Eindiffundieren in den porösen Körper einbringen. Dieses Eindiffundieren erfolgt als getrennter Verfahrensschritt im Anschluss an die oben geschilderte Wärmebehandlung und Reinigung des in der Form befindlichen verdichteten Pulvermaterials.

Beispielsweise kann man einen rohrförmigen porösen Körper durch Wärmebehandlung in einer geeigneten fluorhaltigen Gasatmosphäre, die z.B. $CF_4$ enthält, mit F dotieren und dadurch den Brechungsindex des aus diesem Körper entstehenden Glases gegenüber undotiertem $SiO_2$-Glas herabsetzen. Ein derart dotierter rohrförmiger poröser Körper kann dann zusammen mit einem undotierten oder anders dotierten stabförmigen porösen Körper wie vorstehend beschrieben zu einer glasigen Vorform eines Lichtwellenleiters mit einer Kern-Mantel-Struktur weiterverarbeitet werden.

Ein rohrförmiger poröser Körper kann auch auf folgende Weise weiterverarbeitet werden, unabhängig davon, ob er dotiert ist oder nicht und wie seine Dotierung entstanden ist.

Er kann als Form für das oben geschilderte Verfahren des oben geschilderten verdichteten Einfüllens von Pulvermaterial mit anschliessender Wärmebehandlung verwendet werden.

Dabei wird statt eines Kieselglasrohres ein poröses Rohr aus dotiertem oder undotiertem $SiO_2$-Glasausgangsmaterial mit einem Pulvermaterial derselben oder einer anderen chemischen Zusammensetzung wie beschrieben gefüllt und dieses Rohr mit dem darin befindlichen verdichteten Pulvermaterial einer Wärmebehandlung unterzogen, so dass in dem Rohr ein stabförmiger poröser Körper entsteht. Anschliessend wird dieses Gebilde aus zwei porösen Körpern zu einem Glaskörper gesintert.

Falls das Gebilde aus zwei porösen Körpern noch nicht in der gewünschten Art dotiert ist, z.B. überhaupt keine Dotiermittel enthält, so kann man wie oben für ein poröses Rohr erwähnt, in diesem Stadium das poröse Rohr mit dem darin befindlichen porösen Stab dadurch dotieren, dass man durch Wärmebehandlung in einer geeigneten Atmosphäre das Dotiermittel, z.B. F, in das Stab-Rohr-Gebilde eindiffundieren lässt. Die dadurch erreichbare Dotiermittelkonzentration ist von der Dichte des porösen Materials abhängig, so dass durch unterschiedliche Dichte zwischen dem rohrförmigen und dem darin befindlichen stabförmigen porösen Körper trotz eines einzigen Diffusionsvorgangs eine unterschiedliche Dotiermittelkonzentration in den beiden Körpern erreichbar ist. Der daraus beim Sintern entstehende Glaskörper ist somit als Vorform eines Lichtwellenleiters mit Kern-Mantel-Struktur geeignet.

Diese Art von Dotierung durch Diffusion des Dotiermittels ist auch auf solche porösen Stab-Rohr-Gebilde anwendbar, deren poröser Stab ohne Verwendung des porösen Rohres als Form auf irgend eine andere Weise hergestellt ist, und auch auf poröse stabförmige Körper mit in radialer Richtung konstanter oder variierender Dichte.

Im oben beschriebenen Ausführungsbeispiel wird als Form ein Kieselglasrohr verwendet und dieses nach der Wärmebehandlung, also vor dem Sintern, vom porösen Körper entfernt. Stattdessen kann der poröse Körper auch nach der Wärmebehandlung und während des Sinterns in dem Kieselglasrohr belassen werden und erst nach dem Sintern der im Kieselglasrohr gebildete deutlich geschrumpfte Glaskörper aus dem Kieselglasrohr entnommen werden. Bei diesem Vorgehen braucht die Temperatur während der Wärmebehandlung nicht so hoch zu sein, dass der poröse Körper schrumpft.

Ein weiteres Verfahren, bei dem ein Schrumpfen des porösen Körpers während der Wärmebehandlung nicht erforderlich ist, ist das folgende: Als Form wird ein aus zwei Halbschalen oder aus mehreren Teilen bestehendes Rohr, vorzugsweise aus Kieselglas, verwendet. Durch Zerlegen eines solchen Rohres in seine Teile kann der poröse Körper leicht entnommen werden.

Im Falle eines mehrteiligen Rohres kann dieses auch schon vor der Wärmebehandlung von dem durch verdichtendes Einfüllen entstandenen porösen Körper abgenommen werden, da dieses Verdichten das Pulvermaterial bereits soweit zusammenhängend macht, dass es schon vor der in der Wärmebehandlung stattfindenden Verfestigung nicht mehr auseinanderfällt.

Eine Weiterbildung des vorstehend beschriebenen Verfahrens, die nicht dessen charakteristische Verfahrensmerkmale betrifft, sondern lediglich eine Massnahme darstellt, die die Handhabung des porösen Körpers erleichtern soll, ist die Folgende:

In das verdichtet in die Form eingefüllte Pulvermaterial wird ein Kieselglasstab beim Einfüllen eingesetzt, der bei den nachfolgenden Verfahrensschritten in dem Material verbleibt. Dieser Kieselglasstab wird während des Einfüllens in einer in der Mitte des Deckels 6 befindliche Öffnung so gehalten, dass er entlang der Längsachse der Form 5 verlaufend, ein geringes Stück in die Form 5 hineinragt. Die Öffnung enthält einen Dichtring, der so fest auf dem Kieselglasstab sitzt, dass dieser während des Einfüllens dem Einfülldruck standhält und seine Lage beibehält und dass nach dem Einfüllen der Deckel über das freie Ende des Kieselglasstabes hinausgeschoben und dadurch entfernt werden kann. Der Kieselglasstab bleibt anschliessend während der nachfolgenden Verfahrensschritte, Wärmebehandlung und Sintern, und auch beim anschliessenden Ziehen des Lichtwellenleiters aus einer glasigen Vorform in dem porösen Körper bzw. in der daraus entstehenden glasigen Vorform.

Erwähnt sei noch, dass in jeder Phase des beschriebenen Verfahrens vom Stadium der Herstellung des pulverförmigen Glasausgangsmaterials bis zum Sintern zu einem als Vorform geeigneten länglichen Glaskörper darauf geachtet werden muss, dass Verunreinigungen des Materials vermieden werden.

Hierfür ist es günstig, dass die Vorratsbehälter für das Pulvermaterial stets luftdicht abgeschlossen sind und dass das Einfüllen in die Form in abgeschlossener Atmosphäre, beispielsweise in einem evakuierten Handschuhkasten, geschieht. In diesen Handschuhkasten ragt von aussen das oder die Förderrohre durch eine vakuumdichte Durchführung hinein. Erst nachdem die Form auf beiden Seiten mit einem Deckel verschlossen ist, wird sie aus diesem Handschuhkasten entnommen und in den Ofen zur Wärmebehandlung gebracht. Günstig für die Reinhaltung ist es auch, wenn das Pulvermaterial möglichst nur mit Vorrichtungsteilen aus Kieselglas in Kontakt kommt, wenn also nicht nur die Form, sondern auch die Einfüllvorrichtung aus Kieselglas besteht.

Eine weitere Massnahme zur Vermeidung von Verunreinigungen besteht darin, dass die Wärmebehandlung des porösen Körpers in Gasatmosphäre und das anschliessende Sintern zu einem Glaskörper in einer einzigen Apparatur durchführt, die zwischen der Wärmebehandlung in Gasatmosphäre und dem Sintervorgang den porösen Körper in abgeschlossener Atmosphäre hält, beispielsweise indem der poröse Körper von unten nach oben durch eine erste Zone, in der die Wärmebehandlung stattfindet, und von dieser sofort in eine zweite Zone, in der das Sintern stattfindet, geschoben wird.

Nachstehend wird eine Verfahrensvariante beschrieben, bei der ebenfalls von dem erfindungsgemässen Prinzip Gebrauch gemacht wird, dass das pulverförmige Glasausgangsmaterial beim Einfüllen in die Form verdichtet wird, bei dem aber zum Einfüllen in die Form keine Förderschnecken verwendet werden. Diese Variante besteht darin, dass die Form, die gleich oder ähnlich wie die beschriebenen Formen gestaltet ist, beim Einfüllen in eine Rotationsbewegung versetzt wird, derart, dass in Richtung ihrer Längsachse die Zentrifugalkraft wirkt und das Pulvermaterial unter deren Wirkung eingefüllt und verdichtet wird, wobei der Einfülldruck von der Zentrifugalkraft bestimmt wird. Auch bei diesem Verfahren können mehrere koaxiale Rohre verwendet werden, um einen porösen Körper mit radial abgestufter Zusammensetzung oder einen rohrförmigen porösen Körper zu erzeugen.

Zum Herstellen von stabförmigen porösen Körpern, deren Zusammensetzung sich in radialer Richtung ändert, wurden vorstehend unter anderem solche Verfahren angegeben, bei denen aus mehreren koaxial angeordneten Förderrohren pulverförmiges Glasmaterial mit in radialer Richtung sich ändernder Zusammensetzung mit Verdichtung in die Pressform eingefüllt wird. Der die Verdichtung bewirkende Einfülldruck wird dabei entweder durch Förderschnecken oder durch eine Zentrifugalkraft erzeugt.

In jedem Falle bedeuten die koaxiale Anordnung verschiedener Förderrohre und die gleichzeitige Förderung verschiedener Materialien einen beträchtlichen apparativen Aufwand.

Im folgenden wird ein apparativ einfacheres Verfahren angegeben: wie oben im Zusammenhang mit der Herstellung eines rohrförmigen Körpers beschrieben, ist in der Form nach Fig. 1 entlang der Längsachse in der Mitte vom einen Ende zum anderen Ende verlaufend ein stabförmiger Grundkörper, d.h. ein Stab oder ein Rohr, beispielsweise aus Kieselglas angeordnet, und es wird pulverförmiges Glasausgangsmaterial in den Zwischenraum zwischen diesem Grundkörper und der inneren Wand der Form mittels einer Förderschnecke so eingefüllt, dass es dabei verdichtet wird. Das eingefüllte Material hat beispielsweise die für den Mantel eines Lichtwellenleiters geeignete Zusammensetzung. Durch die Verdichtung erhält das eingefüllte Material eine solche Konsistenz, dass sich der Grundkörper nach Beendigung des Einfüllvorgangs herausziehen lässt, ohne dass es in den entstehenden Hohlraum hineinfällt. Nachdem der Grundkörper herausgezogen ist, wird weiteres pulverförmiges Glasausgangsmaterial mit einer anderen Zusammensetzung, z.B. Kernmaterial, ebenfalls mit Verdichtung in den Hohlraum eingefüllt.

Falls dieses Material eine über den Querschnitt konstante Zusammensetzung haben soll, so wird es nach der in Fig. 1 gezeigte Art mittels einer zentral angeordneten Förderschnecke eingefüllt. Falls die Materialzusammensetzung über den Querschnitt variieren soll, wie es für einen Lichtwellenleiter mit einem Gradientenindexprofil erforderlich ist, so wird nach Entfernen des Grundkörpers ein anderen Grundkörper mit kleinerem Durchmesser in der Mitte des Hohlraums entlang der Längsachse angeordnet und in den Zwischenraum pulverförmiges Glasausgangsmaterial mit anderer Zusammensetzung mittels einer an den Zwischenraum angepassten Förderschnecke der in Fig. 3 gezeigten Art unter Verdichtung eingefüllt, danach der Grundkörper wieder entfernt und der nächste Grundkörper eingeführt usw., bis schliesslich der restliche Hohlraum mittels einer zentral angeordneten Förderschnecke mit dem für den Zentralbereich geeigneten Material gefüllt wird. Der erste Einfüllvorgang wird also mehrmals mit geänderter Materialzusammensetzung, jeweils anderem Grundkörper und einer daran angepassten Förderschnecke wiederholt, bis der restliche Hohlraum gefüllt wird.

Das vorstehend beschriebene Verfahren, bei dem die aneinander angrenzenden koaxialen Bereiche der Form nacheinander gefüllt werden, hat den Vorteil, dass jeder der verschiedenen Einfüllschritte hinsichtlich des Einfülldrucks und der Einfüllgeschwindigkeit individuell und unabhängig von den anderen gesteuert werden kann.

Statt der Förderschnecken können auch bei diesem Verfahren entsprechend wirkende Zentrifugalkräfte angwendet werden.

Auch bei dem vorstehend beschriebenen Verfahren ist es möglich, den durch die verfestigende Wärmebehandlung des eingefüllten Materials erhaltenen porösen Körper dadurch zu dotieren, dass man durch Wärmebehandlung in einer geeigneten Atmosphäre das Dotiermittel, z.B. F, eindiffundieren lässt. Durch unterschiedliche Dichte von aneinandergrenzenden Schichten des porösen Körpers ergibt sich eine unterschiedliche Dotierungsmittelkonzentration bei dieser Art der Diffusionsdotierung.

Eine Dotierung durch Diffusion eines Dotiermittels ist auch bei der folgenden Verfahrensführung anwendbar:

Ein glasiger Stab aus Kernglasmaterial oder ein poröser Stab aus Kernglasmaterial, jeweils dotiert oder undotiert, wird in die Form eingesetzt und während des Einfüllens so gehalten, dass er sich entlang der Längsachse der Form in deren Mittel vom einen zum anderen Ende erstreckt. Das Pulvermaterial wird dann wie weiter oben beschrieben in den Zwischenraum zwischen diesem Stab und die Form eingefüllt und dann durch eine Wärmebehandlung verfestigt. Nach dieser Wärmebehandlung wird das verfestigte Gebilde dadurch dotiert, dass man unter einer erneuten Wärmebehandlung in einer das Dotiermittel Fluor oder eine fluorhaltige Verbindung enthaltenden Atmosphäre das Dotiermittel eindiffundieren lässt. Ist der Stab glasig, so erhält dabei nur das daran angrenzende poröse, verfestigte Material eine Dotierung, ist er porös, so erhält er wegen seiner vom daran angrenzenden, ebenfalls porösen und verfestigten Material, verschiedener Dichte eine diesem gegenüber verschiedene Dotiermittelkonzentration.

Bei dieser dotierender Wärmebehandlung kann der teilweise oder ganz poröse verfestigte Körper in der Form verbleiben oder zuvor aus der Form entnommen werden.

Alternativ zu der vorstehend beschriebenen dotierenden Wärmebehandlung kann die Diffusions-Dotierung auch bereits bei der verfestigten Wärmebehandlung vorgenommen werden.

Schliesslich ist es auch möglich, bei dem vorstehend beschriebenen Verfahren, bei dem Pulvermaterial in eine einen Stab aus Kernglasmaterial enthaltende Form eingefüllt und danach verfestigt wird, auf die Diffusions-Dotierung zu verzichten, wenn das Kernglasmaterial und/oder das Pulvermaterial bereits so zusammengesetzt sind, dass sie die Dotiermittel in geeigneter Konzentration enthalten.

In jedem Falle wird der teilweise oder ganz poröse verfestigte Körper, gleichgültig, ob er seine Dotierung bereits aufgrund der Zusammensetzung des Stabes und des eingefüllten Pulvermaterials oder als Ergebnis einer nach der Verfestigung erfolgten Diffusions-Dotierung hat, zu einem glasigen Körper gesintert, wobei er, wie bei anderen oben beschriebenen Ausführungsbeispielen, sich noch in der Form befindet, oder bereits aus dieser entnommen ist.

**Patentansprüche**

1. Verfahren zur Herstellung eines länglichen Glaskörpers bestehend aus den Verfahrensschritten:

Einfüllen von pulverförmigem Glasausgangsmaterial in eine Form (5) derart, dass es während des Einfüllens verdichtet wird,

Wärmebehandlung des beim Einfüllen verdichteten pulverförmigen Glasausgangsmaterials, derart, dass es sich zu einem porösen Körper verfestigt, und

Sintern des porösen Körpers zum Glaskörper.

2. Verfahren nach Anspruch 1, dadurch gekennzeichnet, dass als Form (5) ein Rohr aus Kieselglas verwendet wird.

3. Verfahren nach Anspruch 1, dadurch gekennzeichnet, dass als Form (5) ein poröses Rohr aus Glasausgangsmaterial, dessen Zusammensetzung anders ist als die des eingefüllten pulverförmigen Glasausgangsmaterials, verwendet wird und dass diese Form gemeinsam mit dem darin durch die Wärmebehandlung entstandenen porösen Körper zum Glaskörper gesintert wird.

4. Verfahren nach Anspruch 1 oder 2, dadurch gekennzeichnet, dass als Form (5) ein aus mehreren Teilen bestehendes Rohr verwendet wird und dass nach der Wärmebehandlung der poröse Körper durch Zerlegen des Rohrs in seine Teile aus diesem entnommen wird.

5. Verfahren nach Anspruch 1 oder 2, dadurch gekennzeichnet, dass der poröse Körper nach der Wärmebehandlung und während des Sinterns in der Form (5) belassen wird und dass nach dem Sintern der entstandene Glaskörper aus der Form entnommen wird.

6. Verfahren nach einem der Ansprüche 1 bis 5, dadurch gekennzeichnet, dass in das pulverförmige Glasausgangsmaterial beim Einfüllen in die Form (5) ein Stück eines Kieselglasstabs eingesetzt wird, und dass der Kieselglasstab während der nachfolgenden Verfahrensschritte als Handhabungsmittel mit dem Glasausgangsmaterial verbunden bleibt.

7. Verfahren nach einem der Ansprüche 1 bis 6, dadurch gekennzeichnet, dass das pulverförmige Glasausgangsmaterial mittels einer Förderschnecke (3, 25) unter einem ständigen, regelbaren Druck und mit regelbarer Fördergeschwindigkeit in die Form (5) eingefüllt wird.

8. Verfahren nach einem der Ansprüche 1 bis 6, dadurch gekennzeichnet, dass mittels einer Anordnung von koaxialen Förderschnecken ein Material mit einer ersten Zusammensetzung in einen achsnahen Bereich und mindestens ein Material mit einer anderen Zusammensetzung in mindestens einen zum achsnahen Bereich koaxialen Bereich unter einem ständigen, jeweils regelbaren Druck mit jeweils regelbarer Fördergeschwindigkeit in die Form (5) eingefüllt werden.

9. Verfahren nach einem der Ansprüche 1 bis 6, dadurch gekennzeichnet, dass mittels mehrerer parallel nebeneinander angeordneter Förderschnecken Materialien mit gleicher oder unterschiedlicher Zusammensetzung in einen inneren Bereich und mittels einer oder mehreren diesen umgebenden zueinander koaxialen Förderschnecken Materialien mit anderen Zusammensetzungen in daran anschliessende Bereiche eingefüllt werden, wobei das Einfüllen jeweils unter einem ständigen, regelbaren Druck und mit jeweils regelbarer Fördergeschwindigkeit erfolgt.

10. Verfahren nach einem der Ansprüche 1 bis 7, dadurch gekennzeichnet, dass zeitlich nacheinander unterschiedlich zusammengesetzte pulverförmige Glasausgangsmaterialien in aneinander angrenzende koaxiale Bereiche jeweils mittels einer Förderschnecke (25, 3) unter einem ständigen, regelbaren Druck und mit regelbarer Fördergeschwindigkeit in die Form eingefüllt werden.

11. Verfahren nach Anspruch 10, dadurch gekennzeichnet, dass in der Mitte der Form (5) ein stabförmiger Grundkörper in Längsrichtung vom einen zum anderen Ende verlaufend angeordnet ist, dass pulverförmiges Glasausgangsmaterial mit einer ersten Zusammensetzung in den Zwischenraum zwischen diesem Grundkörper und der Innenwand der Form unter Verdichtung mittels einer Förderschnecke (25) eingefüllt wird, dass nach diesem Einfüllvorgang der Grundkörper herausgezogen und in den entstandenen Hohlraum pulverförmiges Glasausgangsmaterial mit einer anderen Zusammensetzung ebenfalls unter Verdichtung mittels einer oder mehrerer Förderschnecken (3) eingefüllt wird.

12. Verfahren nach Anspruch 11, dadurch gekennzeichnet, dass zum Befüllen des Hohlraumes der vorhergehende Einfüllvorgang zunächst ein- oder mehrere Male mit jeweils einem anderen Grundkörper und einer daran angepassten Förderschnecke (25) und einer anderen Zusamensetzung des pulverförmigen Glasausgangsmaterials wiederholt und dann der restliche Hohlraum mittels einer weiteren Förderschnecke (3) ebenfalls unter Verdichtung gefüllt wird, derart, dass eine in radialer Richtung stufenweise variierende Zusammensetzung des in die Form eingefüllten pulverförmigen Glasausgangsmaterials entsteht.

13. Verfahren nach einem der Ansprüche 7 bis 12, dadurch gekennzeichnet, dass der Druck zum Verdichten des in die Form eingefüllten Glasausgangsmaterials durch die Kraft der Förderschnecke (3, 25) erzeugt und durch eine einstellbare, auf das in Förderrichtung gelegene Ende der Form (5) wirkende Gegenkraft begrenzt wird.

14. Vorrichtung zur Durchführung des Verfahrensschritts des Einfüllens des Verfahrens nach Anspruch 13 mit den Merkmalen,

dass sie als zu befüllende Form (5) ein Rohr aus Kieselglas enthält,

dass sie eine oder mehrere Förderschnecken (3, 25) zum Einfüllen des pulverförmigen Glasausgangsmaterials in die Form (5) hat,

dass jede einzeln oder innerhalb einer Anordnung von Förderschnecken wirkende Förderschnecke (3, 25) in einem Förderrohr (4) oder einer Anordnung von Förderrohren (21, 22) angeordnet ist,

dass sie einen die Form (5) beim Einfüllen an einem ihrer Enden verschliessenden Deckel (6) aufweist,

dass das Förderrohr (4) oder die Anordnung von Förderrohren (21, 22) vom anderen Ende her in Längsrichtung der Form (5) in diese hineinragt,

dass die Form (5) in Förderrichtung relativ zum Förderrohr (4, 21, 22) verschiebbar angeordnet ist und

dass Mittel (16, 17, 18, 19, 20) vorhanden sind, die auf den das verschlossene Ende der Form verschliessenden Deckel (6) entgegen der Förderrichtung eine einstellbare Gegenkraft ausüben.

15. Verfahren nach einem der Ansprüche 1 bis 13, dadurch gekennzeichnet, dass ein stabförmiger poröser Körper und ein rohrförmiger poröser Körper getrennt hergestellt werden, der stabförmige poröse Körper in den rohrförmigen porösen Körper gesteckt und das Stab-Rohr-Gebilde zu dem Glaskörper gesintert wird.

16. Verfahren nach einem der Ansprüche 1 bis 13, dadurch gekennzeichnet, dass ein stabförmiger poröser Körper und ein rohrförmiger poröser Körper getrennt hergestellt und zu einem stabförmigen glasigen und zu einem rohrförmigen glasigen Körper gesintert werden und dass der stabförmige Glaskörper in den rohrförmigen Glaskörper gesteckt und beide zu dem Glaskörper zusammengeschmolzen werden.

17. Verfahren nach einem der Ansprüche 1 bis 13, dadurch gekennzeichnet, dass das pulverförmige Glasausgangsmaterial vor dem Einfüllen in die Form durch Vakuumtempern getrocknet und/oder durch eine Wärmebehandlung in chlorhaltiger Atmosphäre gereinigt wird.

18. Verfahren nach einem der Ansprüche 1 bis 13, dadurch gekennzeichnet, dass das pulverförmige Glasausgangsmaterial vor dem Einfüllen in die Pressform agglomeriert wird, um die Schüttdichte zu erhöhen.

19. Verfahren nach einem der vorstehenden Verfahrensansprüche, dadurch gekennzeichnet, dass der rohrförmige oder der stabförmige poröse Körper oder ein Gebilde aus beiden durch eine Wärmebehandlung, bei der ein Dotiermittel, vorzugsweise Fluor, eindiffundiert, dotiert wird.

20. Verfahren nach einem der vorstehenden Ansprüche mit Ausnahme der Ansprüche 14 bis 16 und 19, dadurch gekennzeichnet, dass der in der Form entstandene poröse Körper durch eine Wärmebehandlung, bei der ein Dotiermittel, vorzugsweise Fluor, eindiffundiert, dotiert wird.

21. Verfahren nach einem der Ansprüche 1 bis 18 mit Ausnahme der Ansprüche 14 bis 16 oder nach Anspruch 20 mit Ausnahme der Rückbeziehungen auf die Ansprüche 6, 9, 10, 11, 12, dadurch gekennzeichnet, dass beim Einfüllen in die Form (5) in deren Mitte ein stabförmiger glasiger oder poröser Grundkörper in Längsrichtung von einem Ende zum anderen Ende verlaufend angeordnet ist, dass pulverförmiges Glasausgangsmaterial in den Zwischenraum zwischen diesem Grundkörper und der Innenwand der Form unter Verdichtung eingefüllt wird, dass der stabförmige Grundkörper während sämtlicher weiterer Verfahrensschritte innerhalb des eingefüllten Materials verbleibt.

**Claims**

1. Method of producing an elongated glass body, consisting of the following steps:

filling starting glass powder material into a mold (5) in such a manner that it is compacted during the filling,

subjecting the starting glass powder material, compacted during the filling, to a heat treatment so that it is consolidated to a porous body, and

sintering the porous body to form a glass body.

2. A method as claimed in claim 1, characterized in that the mold (5) is a tube made of silica glass.

3. A method as claimed in claim 1, characterized in that the mold (5) is a porous tube of starting glass material whose composition differs from that of the starting glass powder material filled into the mold, and that this mold, together with the porous body formed therein by the heat treatment, is sintered to form the glass body.

4. A method as claimed in claim 1 or 2, characterized in that the mold (5) is a tube consisting of several parts, and that after the heat treatment, the porous body is removed from the tube after the latter has been taken apart.

5. A method as claimed in claim 1 or 2, characterized in that after the heat treatment and during the sintering, the porous body is left in the mold (5) and that after the sintering the glass body thus formed is removed from the mold.

6. A method as claimed in any one of claims 1 to 5, characterized in that, during the filling of starting glass powder material into the mold (5), a piece of a silica glass rod is inserted into the starting glass powder material and that during the subsequent process steps the silica glass rod remains joined to the starting glass material as a manipulating aid.

7. A method as claimed in any one of claims 1 to 6, characterized in that the starting glass powder material is filled into the mold (5) by a screw conveyor (3, 25) under continuous controllable pressure and at a controllable conveying speed.

8. A method as claimed in any one of claims 1 to 6, characterized in that, by means of an arrangement of coaxial screw conveyors, a material having a first composition is filled into the mold (5) in an area near the axis, and at least one material having a different composition is filled into the mold (5) in at least one area coaxial with the area near the axis, under continuous controllable pressure and at a controllable conveying speed.

9. A method as claimed in any one of claims 1 to 6, characterized in that materials with the same or different compositions are filled into an inner area using several screw conveyors arranged in parallel, and materials with other compositions into adjacent areas using one or more coaxial screw conveyors surrounding said inner area, the filling taking place under continuous controllable pressure and at a controllable conveying speed.

10. A method as claimed in any one of claims 1 to 7, characterized in that starting glass powder materials of different compositions are filled succesively in time into the mold in coaxial areas adjacent to each other by separate screw conyeyors (25, 3) under continuous controllable pressure and at a controllable conveying speed.

11. A method as claimed in claim 10, characterized in that the mold (5) contains a central rod-shaped body which extends from one end of the mold to the other, that starting glass powder material having a first composition is filled into and compacted in the space between said body and the inside wall of the mold using a screw conveyor (25), that after this filling process, the body is removed, and that starting glass powder material having a different composition is filled into and compacted in the space using one or more screw conveyors (3).

12. A method as claimed in claim 11, characterized in that, to fill the space, the preceding filling process is first repeated once or several times using for each filling process a different body, a screw conveyor (25) adapted thereto, and a different composition of the starting glass powder material, and that the starting glass powder material is then filled into and compacted in the remaining space using a further screw conveyor (3), such that the composition of the starting glass powder material filled into the mold varies in steps in the radial direction.

13. A method as claimed in any one of claims 7 to 12, characterized in that the pressure for compacting the starting glass material filled into the mold is produced by the force of the screw conveyor (3, 25) and limited by an adjustable counterforce acting on the end of the mold (5) located in the direction of conveyance.

14. Apparatus for carrying out the filling step in the method claimed in claim 13 which has the following features:

it contains a silica glass tube as the mold (5) to be filled;

it has one ore more screw conveyors (3, 25) for filling the starting glass powder material into the mold (5);

each screw conveyor (3, 25) acting individually or within an arrangement of screw conveyors is located in a conveyor tube (4) or in an arrangement of conveyor tubes (21, 22);

it has a cover (6) closing one of the ends of the mold (5) during the filling;

the conveyor tube (4) or the arrangement of conveyor tubes (21, 22) extends from the other end into the mold (5) in the longitudinal direction thereof;

the mold (5) is movable in the direction of conveyance relative to the conveyor tube (4, 21, 22), and

means (16, 17, 18, 19, 20) are present which exert an adjustable counterforce on the cover (6) closing the closed end of the mold against the direction of conveyance.

15. A method as claimed in any one of claims 1 to 13, characterized in that a rod-shaped porous body and a tubular porous body are manufactured separately, that the rod-shaped porous body is inserted into the tubular porous body and that the rod-in-tube structure is sintered to form the glass body.

16. A method as claimed in any one of claims 1 to 13, characterized in that a rod-shaped porous body and a tubular porous body are manufactured separately and then sintered into a rod-shaped vitreous body and a tubular vitreous body, that the rod-shaped vitreous body is inserted into the tubular vitreous body, and that both are fused together to form the glass body.

17. A method as claimed in any one of claims 1 to 13, characterized in that, before being filled into the mold, the starting glass powder material is dried by vacuum annealing and/or purified by a heat treatment in a chlorine-containing atmosphere.

18. A method as claimed in any one of claims 1 to 13, characterized in that, before being filled into the mold, the starting glass powder material is agglomerated in order to increase bulk density.

19. A method as claimed in any one of the preceding method claims, characterized in that the tubular porous body or the rod-shaped porous body or a combination thereof is doped by a heat treatment in which a dopant, preferably fluorine, is diffused into the body or combination.

20. A method as claimed in any one of the preceding claims with the exception of claims 14 to 16 and 19, characterized in that the porous body formed in the mold is doped by a heat treatment in which a dopant, preferably fluorine, is diffused into the body.

21. A method as claimed in any one of claims 1 to 18 with the exception of claims 14 to 16 or in claim 20 with the exception of the dependencies on claims 6, 9, 10, 11, 12, characterized in that during the filling of the starting glass powder material into the mold (5), a rod-shaped vitreous or porous body extending from one end of the mold to the other is disposed at the center of the mold, that starting glass powder material is filled into the space between this body and the inside of the mold and compacted, and that during all subsequent process steps, the rod-shaped body remains within the material filled into the mold.

**Revendications**

1. Procédé de fabrication d'un corps allongé en verre comprenant les étapes suivantes:
    remplissage d'un moule (5) par un matériau de départ en verre sous la forme d'une poudre, de sorte que, durant le remplissage, la poudre est compactée,
    traitement thermique du matériau de départ en poudre de verre compactée de sorte que celui-ci se change en un corps poreux, et
    frittage du corps poreux en un corps de verre.

2. Procédé de fabrication conforme à la revendication 1, caractérisé en ce que le moule (5) est un tube en verre de silice.

3. Procédé de fabrication conforme à la revendication 1, caractérisé en ce que le moule (5) est un tube poreux de matériau de départ en verre dont la composition diffère de celui du matériau de départ en verre introduit dans le moule et en ce que ce moule, en même temps que le corps poreux formé dans celui-ci par le traitement thermique, est fritté pour former ledit corps de verre.

4. Procédé de fabrication conforme à la revendication 1 ou 2, caractérisé en ce que le moule (5) est un tube composé de plusieurs parties et en ce que, après le traitement thermique, le corps poreux est retiré du tube, après que celui-ci ait été séparé en ses parties.

5. Procédé de fabrication conforme à la revendication 1 ou 2, caractérisé en ce que, après le traitement thermique et durant le frittage, le corps poreux est laissé dans le moule (5), le corps de verre ainsi formé étant enlevé du moule après le frittage.

6. Procédé de fabrication conforme à l'une quelconque des revendications 1 à 5, caractérisé en ce que, durant le remplissage du moule (5), une partie d'une tige de verre de silice est insérée dans le matériau de départ en poudre de verre et, durant les étapes suivantes du procédé, la tige de verre de silice demeure liée au matériau de départ en verre, comme moyen de manipulation.

7. Procédé de fabrication conforme à l'une quelconque des revendications 1 à 6, caractérisé en ce que le matériau de départ en poudre de verre est introduit dans le moule (5) à l'aide d'un convoyeur à vis (3, 25) sous une pression réglable de façon continue et avec une vitesse de convoyage réglable.

8. Procédé de fabrication conforme à l'une quelconque des revendications 1 à 6, caractérisé en ce que, à l'aide d'un agencement de convoyeurs à vis coaxiaux, un matériau ayant une première composition est introduit dans le moule (5), en un emplacement proche de l'axe, et au moins un matériau ayant une composition différente est introduit dans le moule (5) en au moins un emplacement coaxial audit emplacement proche de l'axe, sous une pression réglable de façon continue et avec une vitesse de convoyage réglable.

9. Procédé de fabrication conforme à l'une quelconque des revendications 1 à 6, caractérisé en ce que des matériaux ayant la même ou des compositions différentes sont introduits dans un emplacement intérieur, à l'aide de plusieurs convoyeurs à vis disposés en parallèle, et des matériaux ayant d'autres compositions sont introduits dans des emplacements adjacents à l'aide d'un ou plusieurs convoyeurs à vis entourant ledit emplacement intérieur, avec une pression réglable, de façon continue et une vitesse de convoyage réglable.

10. Procédé de fabrication conforme à l'une quelconque des revendications 1 à 7, caractérisé en ce que des matériaux de départ en poudre de verre de compositions différentes sont introduits successivement dans le temps à l'intérieur du moule, dans des emplacements coaxiaux adjacents les uns aux autres, par des convoyeurs à vis séparés (3, 25), sous une pression réglable de façon continue et avec une vitesse de convoyage réglable.

11. Procédé de fabrication conforme à la revendication 10, caractérisé en ce que le moule (5) est pourvu d'un corps central en forme de tige s'étendant d'une extrémité à l'autre du moule, en ce qu'un matériau de départ en poudre de verre ayant une première composition est introduit et compacté dans l'espace entre ledit corps et la paroi intérieure du moule, à l'aide d'un convoyeur à vis (25), en ce que, après cette étape de remplissage, le corps est enlevé et en ce qu'un matériau de départ en poudre de verre ayant une composition différente est introduit et compacté dans l'espace libéré à l'aide d'un ou plusieurs convoyeurs à vis (3).

12. Procédé de fabrication conforme à la revendication 11, caractérisé en ce que, pour remplir l'espace libéré, l'étape de remplissage précédente est d'abord répétée une ou plusieurs fois, à l'aide, pour chaque étape de remplissage, un corps central différent, en convoyeur à vis (25) adapté à celui-ci et une composition différente du matériau de départ en poudre de verre, et en ce que le matériau de départ en poudre de verre est enfin introduit et compacté dans l'espace restant, à l'aide d'un convoyeur à vis additionnel (3), de telle sorte que la composition du matériau de départ en poudre de verre introduit dans le moule varie par étapes dans le sens radial.

13. Procédé de fabrication selon l'une quelconque des revendications 7 à 12, caractérisé en ce que la pression de compactage du matériau de départ en poudre de verre introduit dans le moule est produite par la force du convoyeur à vis (3, 25) et est limitée par une force antagoniste réglable agissant sur l'extrémité du moule (5) située dans la direction du convoyage.

14. Dispositif pour la mise en oeuvre des étapes du procédé de remplissage conforme au procédé de la revendication 13 possédant les caractéristiques suivantes:

il comprend un tube de verre de silice comme moule de remplissage (5),

un ou plusieurs convoyeurs à vis (3, 25) sont prévus pour introduire le matériau de départ en poudre de verre dans le moule (5),

chaque convoyeur à vis, opérant seul ou au sein d'un agencement de convoyeurs à vis, est disposé dans un tube convoyeur (4) ou un arrangement de tubes convoyeurs (21, 22),

le moule (5) est pourvu d'un couvercle (6) fermant, lors du remplissage, l'une de ses extrémités terminales,

le tube de convoyage (4) ou l'arrangement de tubes de convoyage (21, 22) s'étend dans le moule (5), depuis l'autre extrémité, dans la direction longitudinale de celui-ci,

le moule est agencé pour être mobile dans la direction de convoyage, par rapport au tube de convoyage (4, 21, 22) et

des moyens (16, 17, 18, 19, 20) sont prévus pour appliquer une force antagoniste réglable opposée à la direction de convoyage sur le couvercle (6) refermant l'extrémité refermée du moule.

15. Procédé de fabrication selon l'une quelconque des revendications 1 à 13, caractérisé en ce qu'un corps poreux en forme de tige et un corps poreux tubulaire sont séparément fabriqués, en ce que le corps poreux en forme de tige est inséré dans le corps poreux tubulaire et en ce que la structure comprenant la tige dans le tube est frittée pour fournir ledit corps de verre.

16. Procédé de fabrication selon l'une quelconque des revendications 1 à 13, caractérisé en ce qu'un corps poreux en forme de tige et un corps poreux tubulaire sont séparément fabriqués et frittés en un corps vitreux en forme de tige et un corps vitreux tubulaire, en ce que le corps vitreux en forme de tige est inséré dans le corps vitreux tubulaire et en que l'ensemble est fondu pour fournir ledit corps de verre.

17. Procédé de fabrication selon l'une quelconque des revendications 1 à 13, caractérisé en ce le matériau de départ en poudre de verre, avant d'être introduit dans le moule, est séché par recuit sous vide et/ou purifié par traitement thermique dans une atmosphère contenant du chlore.

18. Procédé de fabrication selon l'une quelconque des revendications 1 à 13, caractérisé en ce le matériau de départ en poudre de verre, avant d'être introduit dans le moule, est aggloméré afin d'augmenter sa densité.

19. Procédé de fabrication selon l'une quelconque des revendications de procédé précédentes, caractérisé en ce que le corps poreux tubulaire, ou le corps poreux en forme de tige, ou une combinaison de ceux-ci, est dopé à l'aide d'un traitement thermique dans lequel un matériau dopant, de préférence du fluor, y est diffusé.

20. Procédé de fabrication selon l'une quelconque des revendications précédentes, à l'exception des revendications 14 à 16 et 19, caractérisé en ce que le corps poreux contenu dans le moule est dopé à l'aide d'un traitement thermique dans lequel un matériau dopant, de préférence du fluor, y est diffusé.

21. Procédé de fabrication selon l'une quelconque des revendications 1 à 18, à l'exception des revendications 14 à 16 ou selon la revendication 20, à l'exception des renvois aux revendications 6, 9, 10, 11, 12, caractérisé en ce que, durant le remplissage du moule (5), dans le mileu duquel est prévu un corps poreux ou en verre en forme de tige s'étendant dans le sens longitudinal, d'une extrémité à l'autre, le matériau de départ en poudre de verre est introduit dans l'espace entre ladite tige et la paroi intérieure du moule, en y étant compacté, et en ce que le corps en forme de tige demeure dans le matériau introduit, durant des étapes de procédé similaires additionelles.

Fig.1

Fig.2

Fig.3